# FASCICULE DE BREVET EUROPEEN

(11) **EP 4 226 454 B1**
(45) Date de publication et mention de la délivrance du brevet: **19.06.2024**
(21) Numéro de dépôt: 21798755.1
(22) Date de dépôt: 05.10.2021
(51) Int. Cl.: H01M 10/54, H01M 6/52, H01M 4/38, H01M 4/40, H01M 10/052, H01M 10/054, H01M 10/44, C22B 7/00, B09B 3/00, H01M 4/02

(54) **PROCEDE DE DECHARGE D'UN GENERATEUR ELECTROCHIMIQUE**
VERFAHREN ZUM ENTLADEN EINES ELEKTROCHEMISCHEN GENERATORS
METHOD FOR DISCHARGING AN ELECTROCHEMICAL GENERATOR

(30) Priorité: 09.10.2020 FR 2010324
(43) Date de publication de la demande: 16.08.2023
(73) Titulaire: Commissariat à l'énergie atomique et aux énergies alternatives, 75015 Paris (FR); Orano, 92320 Chatillon (FR)
(72) Inventeur: BILLY, Emmanuel, 38054 Grenoble Cedex 9 (FR); BRUN-BUISSON, David, 38054 GRENOBLE CEDEX 09 (FR); GUILPAIN, Mathilde, 38054 GRENOBLE CEDEX 09 (FR)
(74) Mandataire: Brevalex
(86) Numéro de dépôt international: PCT/FR2021/051724
(87) Numéro de publication internationale: WO 2022/074329

(56) Documents cités:
- WO-A1-2014/017085
- JP-A- H08 306 394

## Description

### DOMAINE TECHNIQUE

La présente invention se rapporte à un procédé de décharge d'un générateur électrochimique, tel qu'un accumulateur ou une batterie Li-lon, Na-lon, ou Lithium-métal, notamment en vue de son recyclage et/ou de son stockage.

Le générateur électrochimique peut être déchargé en toute sécurité et les fractions valorisables peuvent être recyclées.

L'invention est particulièrement intéressante pour le recyclage des systèmes électrochimiques de type modules, batteries, accumulateurs ou piles traités séparément ou en mélange.

### ÉTAT DE LA TECHNIQUE ANTÉRIEURE

Un générateur électrochimique est un dispositif de production d'électricité convertissant de l'énergie chimique en énergie électrique. Il peut s'agir, par exemple, de piles ou d'accumulateurs.

Le marché des accumulateurs, et notamment des accumulateurs au lithium, de type Li-ion, est aujourd'hui en forte expansion, d'une part, du fait des applications dites nomades (smartphone, ordinateur, appareil photographique,...) et, d'autre part, du fait des nouvelles applications liées à la mobilité (véhicules électriques et hybrides) et aux applications dites stationnaires (connectées au réseau électrique).

En raison de la croissance du nombre d'accumulateurs au cours des dernières années, la question de leur recyclage est donc devenue un enjeu majeur.

Classiquement, un accumulateur lithium-ion comprend une anode, une cathode, un séparateur, un électrolyte et un boîtier.

Généralement, l'anode est formée à partir de graphite mélangé à un liant de type PVDF déposé sur une feuille de cuivre et la cathode est un matériau d'insertion de lithium métallique (par exemple, LiCoO₂, LiMnO₂, LiNiOz, LisNiMnCoOe, ou LiFePO₄) mélangé à un liant et déposé sur une feuille d'aluminium.

L'électrolyte est un mélange de solvants non aqueux et de sels de lithium, et, éventuellement, d'additifs pour ralentir les réactions secondaires.

Le fonctionnement est le suivant : lors de la charge, le lithium se désintercale de l'oxyde métallique et s'intercale dans le graphite, où il est thermodynamiquement instable. Lors de la décharge, le processus est inversé et les ions lithium sont intercalés dans l'oxyde métallique de lithium.

Au fur et à mesure de son utilisation, le vieillissement entraîne une perte de capacité et la cellule doit être recyclée.

Cependant, un nombre important d'accumulateurs ou de batteries d'accumulateurs à recycler sont encore au moins partiellement chargés et leur broyage produit des étincelles et des inflammations importantes voire des explosions notamment avec les piles lithium primaires (Li-SOCl₂).

Les cellules endommagées doivent également être recyclées. Cependant, ces cellules peuvent avoir des dépôts de lithium métallique sur l'anode, qui, exposés à l'air ou à l'eau, sont très réactifs.

Les cellules, en fin de vie et/ou endommagées, à recycler doivent donc être traitées avec la plus grande précaution.

Classiquement, le procédé de recyclage des accumulateurs comprend plusieurs étapes :
- une étape de prétraitement incluant une phase de démantèlement et une phase de mise en sécurité,
- des traitements thermiques et/ou hydrométallurgiques pour récupérer les différents matériaux et métaux valorisables contenus dans ces piles et accumulateurs.

A ce jour, le principal problème réside dans la phase de mise en sécurité de ces systèmes électrochimiques à base de lithium (primaire et secondaire).

En effet, lors d'une perte de confinement il se produit des fuites de l'électrolyte, produit toxique, inflammable et corrosif, sous forme liquide mais également gazeux. Les vapeurs ainsi générées et mélangées avec l'air peuvent alors former une atmosphère explosive (ATEX). Celle-ci est susceptible de s'enflammer au contact d'une source d'inflammation du type étincelle ou d'une surface chaude. Il en résulte alors une explosion provoquant des effets thermiques et des effets de pression. De plus, les sels d'électrolyte tels que l'hexafluorophosphate de lithium LiPF₆, le tétrafluoborate de lithium LiBF₄, le perchlorate de lithium LiClO₄, l'hexafluoroarsenate de lithium LiAsF₆ peuvent dégager des fumées particulièrement toxiques et corrosives contenant du phosphore, du fluor et/ou du lithium. Par exemple, il peut y avoir la formation d'acide fluorhydrique (HF) lors de la dégradation thermique de batteries Li-ion.

Pour remédier à ces inconvénients, il est possible de broyer les batteries dans une enceinte à atmosphère et pression contrôlée. A titre d'exemple, le document WO 2005/101564 A1 décrit un procédé de recyclage de batterie à anode de lithium par voie hydrométallurgique, à température ambiante et sous atmosphère inerte. L'atmosphère comprend de l'argon et/ou du dioxyde de carbone. Les deux gaz vont chasser l'oxygène et former un ciel gazeux de protection au-dessus de la charge broyée. La présence de dioxyde de carbone va conduire à initier une passivation du lithium métallique par formation de carbonate de lithium en surface, ce qui ralentit la réactivité de ce métal. L'hydrolyse de la charge broyée contenant du lithium conduit à la formation d'hydrogène. Pour éviter les risques d'inflammation de l'hydrogène et d'explosion, la charge broyée contenant le lithium est ajoutée de manière très contrôlée dans la solution aqueuse et une très forte turbulence au-dessus du bain est créée. Cette opération est associée à un appauvrissement de l'atmosphère en oxygène. L'eau devient riche en hydroxyde de lithium et le lithium est récupéré par addition de carbonate de sodium ou d'acide phosphorique.

Dans le procédé du brevet US 5,888,463 la mise en sécurité des piles et accumulateurs est réalisée par un procédé cryogénique. Les piles et accumulateurs sont congelés dans de l'azote liquide à -196° C avant d'être broyés. Le broyat est ensuite immergé dans de l'eau. Pour éviter la formation de H₂S, le pH est maintenu à un pH d'au moins 10 par addition de LiOH. Les sels de lithium formés (Li₂SO₄, LiCI) sont précipités sous forme de carbonate par ajout de carbonate de sodium.

Le document CA 2 313 173 A1 décrit un procédé de recyclage de piles ioniques au lithium. Les piles sont préalablement découpées dans une atmosphère inerte dépourvue d'eau. Un premier solvant organique (acétonitrile) permet de dissoudre l'électrolyte et un second solvant organique (NMP) permet de dissoudre le liant. Le matériau d'insertion particulaire est ensuite séparé de la solution et réduit par électrolyse.

Dans le document WO 2011/113860 A1, une méthode dite sèche (« Dry-Technology ») est décrite. La température du broyeur est maintenue entre 40 et 50°C et le mélange d'hydrogène et d'oxygène, libéré des batteries, est éliminé, par un mouvement d'air cyclonique, pour minimiser les risques de départ de feu. Les morceaux de batterie et de poussière, récupérés après tamisage, sont refroidis jusqu'à la température ambiante. L'extraction du lithium semble se faire par réaction avec l'oxygène et l'humidité de l'air, occasionnant des risques liés à la présence simultanée d'hydrogène, d'oxygène et de chaleur propice à la combustion et l'explosion. Par ailleurs, le broyage de ces accumulateurs provoque un écrasement et des courts circuits pouvant entraîner une explosion. De plus, l'électrolyte est dégradé, générant des risques, des pertes et des difficultés vis-à-vis de la gestion des poussières et des gaz.

Le procédé UmiCore VAL'EAS^{™}, décrit dans l'article de Georgi-Maschler et al. (« Development of a recycling process for Li-ion batteries », Journal of Power Sources 207 (2012) 173-182) combine des traitements pyrométallurgiques et hydrométallurgiques. Les batteries, démantelées, sont directement introduites dans un four. Le traitement pyrométallurgique permet de les désactiver : l'électrolyte s'évapore à près de 300 °C; les plastiques sont pyrolisés à 700 °C et le reste est finalement fondu et réduit à 1200-1450 °C. Une partie des matières organiques contenues dans les piles sert d'agent réducteur dans le procédé. L'aluminium et le lithium sont perdus. Le fer, le cuivre, et le manganèse sont récupérés en solution aqueuse. Le cobalt et le nickel sont récupérés sous forme de LiCoO₂ et Ni(OH)₂ et recyclés pour former des matériaux de cathode. Cependant, ce type de traitement thermique génère une forte consommation d'énergie et entraîne une forte dégradation des composants de la batterie.

Le document EP 0 613 198 A1 décrit un procédé de récupération des matériaux issus des piles lithium. Les piles sont découpées soit sous jet d'eau haute pression soit sous une atmosphère inerte pour éviter un départ de feu. Puis, le lithium réagit avec de l'eau, un alcool ou de l'acide pour former, respectivement, de l'hydroxyde de lithium, un alcoxyde de lithium ou un sel de lithium (LiCI, par exemple). Cependant, la mise en sécurité réalisée avec un découpage sous jet d'eau haute pression nécessite une forte consommation d'eau et génère des gaz H₂ sous air.

A ce jour, les différents procédés de mise en sécurité/ouverture des piles/batteries décrits ci-dessus nécessitent de réaliser des traitements à haute température, des traitements cryogéniques, et/ou sous atmosphère contrôlée, qui sont des conditions difficilement industrialisables et/ou coûteuses.

### EXPOSÉ DE L'INVENTION

Un but de la présente invention est de proposer un procédé permettant de remédier aux inconvénients de l'art antérieur, et en particulier un procédé permettant de mettre en sécurité un générateur électrochimique, le procédé devant être facilement industrialisable.

Ce but est atteint par un procédé de décharge d'un générateur électrochimique comprenant une électrode négative contenant du lithium ou du sodium et une électrode positive contenant éventuellement du lithium ou du sodium, le procédé comprenant une étape de décharge du générateur électrochimique au cours de laquelle le générateur électrochimique est mis en contact avec une solution de liquide ionique comprenant un liquide ionique solvant et une poudre électriquement conductrice de manière à le décharger.

L'invention se distingue fondamentalement de l'art antérieur par la mise en oeuvre de l'étape de décharge du générateur électrochimique, en présence d'une solution de liquide ionique comprenant une poudre électriquement conductrice. Les liquides ioniques sont non-volatiles, ininflammables et chimiquement stables à des températures pouvant être supérieures à 200°C (par exemple entre 200°C et 400°C). L'ajout d'une poudre électriquement conductrice conduit à une décharge résistive du générateur électrochimique sans action chimique et ainsi à sa mise en sécurité.

Le procédé est très simple à mettre en oeuvre puisqu'il suffit de mettre en contact le générateur électrochimique avec la solution de liquide ionique contenant la poudre électriquement conductrice. De préférence, le générateur électrochimique est immergé dans la solution de liquide ionique.

La solution de liquide ionique forme une « slurry » ou « boue » dont les propriétés électriques et calorifiques permettent une décharge résistive contrôlée et sécurisée du générateur électrochimique. Il n'y a pas besoin de mettre en oeuvre une réaction chimique pour décharger le générateur électrochimique. La résistivité de la poudre dans le milieu liquide ionique contrôle la vitesse de décharge électrique. Les propriétés calorifiques contrôlent la dissipation thermique associée au processus résistif. L'isolation atmosphérique des générateurs électrochimiques par le liquide ionique empêche l'accès à l'oxygène, l'eau et/ou l'air et ainsi évite la génération d'hydrogène. En cas de rupture de confinement (ouverture du générateur électrochimique), le liquide ionique assure la décharge sans risque d'explosion ou d'inflammation.

Par générateur électrochimique, on entend des accumulateurs et/ou piles et/ou batteries et/ou modules (associations de plusieurs accumulateurs).

Durant le processus de décharge, le liquide ionique solvant favorise le refroidissement du milieu et permet d'évacuer les calories.

La solution de liquide ionique peut être optionnellement agitée et/ou refroidie. Il est également possible d'ajouter à la solution de liquide ionique des espèces avec des capacités calorifiques avantageuses favorisant le refroidissement.

Avantageusement, la solution de liquide ionique comprend en outre une espèce redox dite oxydante apte à être réduite sur l'électrode négative de manière à décharger le générateur électrochimique. Cette espèce conduit à l'extraction du lithium ou du sodium de l'électrode négative (anode) L'espèce chimique améliore la décharge par une réaction d'oxydo-réduction avec le lithium (ou le sodium).

Par apte à être réduite sur l'électrode négative, on entend que l'espèce active peut réagir soit directement sur l'électrode négative (anode), dans le cas où le boitier de l'accumulateur est ouvert, soit sur un autre élément connecté électriquement à l'anode, tel que le collecteur de courant anodique, le terminal de l'anode ou encore la masse lorsque l'anode est reliée électriquement à la masse.

Par la suite, lorsque l'on décrit le lithium, le lithium peut être remplacé par le sodium.

Par exemple, dans le cas d'un accumulateur lithium-métal, la réaction de réduction de l'espèce redox dite oxydante conduit à l'oxydation du lithium métallique sous forme ionique.

Selon un autre exemple, dans le cas d'un accumulateur lithium-ion, la réaction de réduction de l'espèce redox dite oxydante conduit à la désinsertion de l'ion lithium du matériau actif de l'électrode négative.

Les ions libres extraits de l'anode, migrent à travers l'électrolyte conducteur ionique et sont immobilisés dans la cathode où ils forment un oxyde de lithium thermodynamiquement stable. Par thermodynamiquement stable, on entend que l'oxyde ne réagit pas violemment avec l'eau et/ou l'air.

Avantageusement, la solution comprend une deuxième espèce redox dite réductrice apte à être oxydée sur l'électrode positive, l'espèce redox dite oxydante et l'espèce redox dite réductrice formant un couple d'espèce redox.

Par couple redox, aussi appelé médiateur redox ou navette électrochimique, on entend un couple oxydant/réducteur (Ox/Red) en solution dont l'oxydant peut être réduit sur l'anode (électrode négative) et le réducteur peut être oxydé sur la cathode (électrode positive). L'oxydation du réducteur et la réduction de l'oxydant permettent de former de nouvelles espèces oxydant/réducteur et/ou de régénérer les espèces initialement présentes en solution. Le procédé est économique puisque le couple redox en solution assure à la fois et simultanément les réactions redox aux électrodes/terminaux du générateur électrochimique, de sorte que la consommation en réactif est nulle ; la solution peut être utilisée pour mettre en sécurité plusieurs générateurs électrochimiques successivement et/ou en mélange.

La ou les espèces redox permettent de décharger significativement voire totalement le générateur électrochimique. De plus, en cas de rupture de l'emballage, elles vont réagir avec les composants internes, de sorte à diminuer la différence de potentiel entre les électrodes (anode et cathode). Cette décharge interne participe également à la mise en sécurité du générateur électrochimique par la diminution de l'énergie chimique des électrodes (et donc la différence de potentiel) et par diminution de l'effet de court-circuit interne. Le générateur électrochimique est mis en sécurité même en cas de détérioration structurelle.

L'absence d'eau permet d'éviter la génération d'hydrogène, principal frein à l'utilisation d'agents extincteurs aqueux qui peuvent générer des atmosphères explosives.

Avantageusement, le couple d'espèce redox est un couple métallique, de préférence choisi parmi Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺, un couple de molécules organiques, un couple de métallocènes tel que Fc/Fc⁺, ou un couple de molécules halogénées comme par exemple Cl₂/Cl⁻ ou Cl⁻/Cl₃⁻.

Avantageusement, la solution de liquide ionique comprend un liquide ionique additionnel.

Avantageusement, la solution de liquide ionique forme un solvant eutectique profond.

Avantageusement, la poudre électriquement conductrice comprend des particules en un matériau carboné.

Selon une première variante avantageuse, la décharge du générateur électrochimique est réalisée sous air.

Selon une deuxième variante avantageuse, la décharge du générateur électrochimique est réalisée sous atmosphère inerte permettant le contrôle de la teneur en oxygène. Ainsi, l'ensemble est sécurisé (vis-à-vis du triangle du feu).

Avantageusement, la décharge du générateur électrochimique est réalisée à une température allant de 5°C à 80°C, et de préférence de 20°C à 60°C.

Avantageusement, le procédé comprend, préalablement à l'étape de décharge du générateur électrochimique, une étape de démantèlement et/ou une étape de tri.

Avantageusement, le procédé comprend, ultérieurement à l'étape de décharge du générateur électrochimique, une étape de stockage et/ou une étape pyrométallurgique et/ou hydrométallurgique.

Avantageusement, le procédé est réalisé pendant le transport du générateur électrochimique, par exemple, vers un lieu de recyclage et/ou vers un lieu de démantèlement. Les générateurs électrochimiques peuvent ainsi être déchargés pendant leur transport d'un site à un autre (gain de temps) en évitant les risques d'inflammation (sécurité durant le transport).

Il est évident que plusieurs générateurs électrochimiques de même nature ou de natures différentes peuvent être déchargés simultanément dans une même solution de liquide ionique.

Il est possible d'adapter la composition de la solution de liquide ionique en fonction de la nature et/ou quantité du ou des générateurs électrochimiques ainsi que de la durée de transport. On peut ainsi réaliser une décharge soit rapide (typiquement une décharge inférieure à 10h et de préférence inférieure à 3h) soit lente.

Le procédé de décharge selon l'invention présente de nombreux avantages :
- Mettre en oeuvre une étape de décharge en une seule étape dans un liquide ionique évitant une réaction violente avec l'eau et/ou l'air, ce qui évite non seulement les problèmes liés à la gestion de l'hydrogène, de l'oxygène et de la chaleur, et donc à la gestion d'atmosphère explosive (sécurité, traitement des affluents, surcoût économique), mais évite aussi d'utiliser d'importants volumes d'eau et donc de traiter les effluent aqueux; l'utilisation d'un liquide ionique évite également la corrosion du générateur électrochimique,
- La décharge n'occasionne pas d'endommagement des objets et ne consomme pas de réactifs.
- La décharge étant contrôlée par la nature des composants de la solution de liquide ionique, la décharge peut être extrêmement rapide (par exemple inférieure à 1h).
- Ne pas utiliser de traitement thermique, ce qui évite les problématiques liées à l'émission des gaz (par exemple des gaz à effets de serre ou pour de tout autre gaz nocif et dangereux pour l'homme et l'environnement), notamment concernant leur traitement, et réduit les coûts financiers et énergétiques du procédé.
- Le traitement est compatible avec le recyclage des différents composants du générateur électrochimique (notamment l'électrolyte n'est pas dégradé).
- La mise en sécurité du générateur électrochimique est simple à mettre en oeuvre.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence à la figure unique annexée.

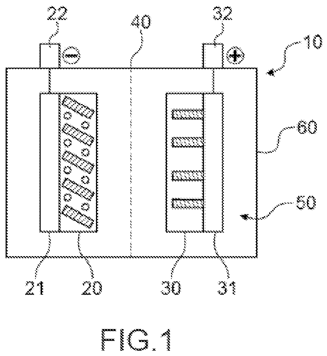

La figure 1 représente de manière schématique, une vue en coupe, d'un accumulateur lithium-ion, selon un mode de réalisation particulier de l'invention.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Par la suite, même si la description fait référence à un accumulateur Li-ion, l'invention est transposable à tout générateur électrochimique, par exemple à une batterie comprenant plusieurs accumulateurs (appelées aussi batteries d'accumulateurs), connectés en série ou en parallèle, en fonction de la tension nominale de fonctionnement et/ou de la quantité d'énergie à fournir, à un module de batteries, ou encore à une pile électrique.

Le procédé de mise en sécurité concerne tous les systèmes électrochimiques de type accumulateur ou pile traités séparément ou en mélange.

Ces différents dispositifs électrochimiques peuvent être de type métalion, par exemple lithium-ion ou sodium-ion, ou encore de type Li-métal,...

Il peut également s'agir d'un système primaire tel que Li/MnO₂, ou encore d'une batterie à circulation (« Redox Flow Battery »).

On choisira, avantageusement, un générateur électrochimique ayant un potentiel supérieur à 1,5V.

On se réfère tout d'abord à la figure 1 qui représente un accumulateur lithium-ion (ou Li-ion) 10. Une seule cellule électrochimique est représentée mais le générateur peut comprendre plusieurs cellules électrochimiques, chaque cellule comprenant une première électrode 20, ici l'anode, et une seconde électrode 30, ici la cathode, un séparateur 40 et un électrolyte 50. Selon un autre mode de réalisation, la première électrode 20 et la seconde électrode 30 pourraient être inversées.

L'anode (électrode négative) 20 est de préférence à base carbone, par exemple, en graphite pouvant être mélangé à un liant de type PVDF et déposé sur une feuille de cuivre. Il peut également s'agir d'un oxyde mixte de lithium comme le titanate de lithium Li₄Ti₅O₁₂ (LTO) pour un accumulateur Li-ion ou d'un oxyde mixte de sodium comme le titanate de sodium pour un accumulateur Na-ion. Il pourrait également s'agir d'un alliage de lithium ou d'un alliage de sodium en fonction de la technologie choisie.

La cathode (électrode positive) 30 est un matériau d'insertion d'ions lithium pour un accumulateur Li-ion. Il peut s'agir d'un oxyde lamellaire de type LiMOz, d'un phosphate LiMPO₄ de structure olivine ou encore d'un composé spinelle LiMn₂O₄, Avec M représentant un métal de transition. On choisira par exemple, une électrode positive en LiCoO₂, LiMnO₂, LiNiOz, LisNiMnCoOe, LiNiₓCo₁₋ₓO₂ (avec 0<x<1) ou LiFePO₄.

La cathode (électrode positive) 30 est un matériau d'insertion d'ions sodium pour un accumulateur Na-ion. Il peut s'agir d'un matériau du type oxyde sodié comprenant au moins un élément métallique de transition, d'un matériau du type phosphate ou sulfate sodié comprenant au moins un élément métallique de transition, d'un matériau du type fluorure sodié, ou encore d'un matériau du type sulfure comprenant au moins un élément métallique de transition.

Le matériau d'insertion peut être mélangé à un liant de type fluorure de polyvinylidène et déposé sur une feuille d'aluminium.

L'électrolyte 50 comporte des sels de lithium (LiPF₆, LiBF₄, LiClO₄ par exemple) ou des sels de sodium (N₃Na par exemple), en fonction de la technologie d'accumulateur choisie, solubilisés dans un mélange de solvants non aqueux. Le mélange de solvants est, par exemple, un mélange binaire ou ternaire. Les solvants sont, par exemple, choisis parmi les solvants à base de carbonates cycliques (carbonate d'éthylène, carbonate de propylène, butylène de carbonate), linéaires ou ramifiés (carbonate de diméthyle, carbonate de di-éthyle, carbonate d'éthyle méthyle, diméthoxyéthane) en proportion diverse.

De manière alternative, il pourrait également s'agir d'un électrolyte polymère comprenant une matrice polymère, en matériau organique et/ou inorganique, un mélange liquide comprenant un ou plusieurs sels métalliques, et éventuellement un matériau de renfort mécanique. La matrice polymère peut comprendre un ou plusieurs matériaux polymères par exemple choisis parmi un polyfluorure de vinylidène (PVDF), un polyacrylonitrile (PAN), un polyfluorure de vinylidène hexafluoropropylène (PVDF-HFP), ou un poly(liquide ionique) de type poly(N-vinylimidazolium) bis(trifluoromethanesulfonylamide)), N, N-diethyl- N- (2-methoxyethyl)- N-methylammonium bis(trifluoromethylsulfonyl)imide (DEMM-TFSI).

La cellule peut être enroulée sur elle-même autour d'un axe d'enroulement ou présenter une architecture empilée.

Un boitier 60 (« casing »), par exemple une poche en polymère, ou un emballage métallique, par exemple en acier, permet d'assurer l'étanchéité de l'accumulateur.

Chaque électrode 20, 30 est reliée à un collecteur de courant 21, 31 traversant le boitier 60 et formant, à l'extérieur du boitier 60, respectivement les terminaux 22, 32 (aussi appelés bornes de sortie ou pôles ou terminaux électriques). La fonction des collecteurs 21, 31 est double : assurer le support mécanique pour la matière active et la conduction électrique jusqu'aux terminaux de la cellule. Les terminaux aussi appelés pôles ou terminaux électriques) forment les bornes de sortie et sont destinés à être connectés à un « récepteur d'énergie ».

Selon certaines configurations, un des terminaux 22, 32 (par exemple celui relié à l'électrode négative) peut être relié à la masse du générateur électrochimique. On dit alors que la masse est le potentiel négatif du générateur électrochimique et que le terminal positif est le potentiel positif du générateur électrochimique. Le potentiel positif est donc défini comme le pôle/terminal positif ainsi que toutes les pièces métalliques raccordées par une continuité électrique depuis ce pôle.

Un dispositif électronique intermédiaire peut, éventuellement, être disposé entre le terminal qui est relié à la masse et cette dernière.

Le procédé de décharge du générateur électrochimique 10 comprend une étape au cours de laquelle on met en contact, de préférence par immersion, un générateur électrochimique 10 et une solution de liquide ionique comprenant un liquide ionique et une poudre électriquement conductrice de manière à décharger le générateur électrochimique.

Cette étape permet de décharger le générateur électrochimique 10 et ainsi le mettre en sécurité.

Par décharge, on entend que le procédé permet de réduire significativement la charge électrique du générateur électrochimique 10, d'au moins 50% et de préférence d'au moins 80% voire de décharger totalement le générateur électrochimique (100%). Le taux de décharge dépend de l'état de charge initial.

La solution de liquide ionique 100, aussi appelée solution liquide ionique, non seulement empêche le contact entre le déchet (piles ou accumulateurs)/l'eau/l'air grâce à la présence du liquide ionique mais en plus assure la décharge du déchet par l'intermédiaire de la poudre. L'ensemble est donc sécurisé vis-à-vis du triangle du feu (comburant, combustible, énergie), en évitant/ou minimisant la présence d'eau à l'origine de la formation d'une atmosphère explosive (gaz H₂, O₂ avec de la chaleur).

De préférence, on décharge complètement le générateur électrochimique 10. Le temps de décharge sera estimé suivant la nature des piles et accumulateurs et du taux de charge.

La solution de liquide ionique 100 comprend au moins un liquide ionique LI₁, appelé liquide ionique solvant, et une espèce active redox.

On entend par liquide ionique l'association comprenant au moins un cation et un anion qui génère un liquide avec une température de fusion inférieure ou voisine de 100°C. Il s'agit de sels fondus.

On entend par liquide ionique solvant un liquide ionique qui est stable sur le plan thermique et électrochimique minimisant un effet de dégradation du milieu durant le phénomène de décharge.

La solution de liquide ionique 100 peut également comprendre un liquide ionique additionnel noté LI₂ ou plusieurs (deux, trois...) liquides ioniques additionnels, c'est-à-dire qu'elle comprend à un mélange de plusieurs liquides ioniques.

On entend par liquide ionique additionnel, un liquide ionique qui favorise une ou des propriétés vis-à-vis de l'étape de mise en sécurité et de décharge. Il peut s'agir, en particulier, d'une ou des propriétés suivantes : extinction, retardateur de flamme visant à prévenir un emballement thermique, navette redox, stabilisateur de sels, viscosité, solubilité, hydrophobicité, conductivité.

Avantageusement, le liquide ionique, et éventuellement, les liquides ioniques additionnels sont liquides à température ambiante (de 20 à 25°C).

Pour le liquide ionique solvant et pour le ou les liquides ioniques additionnels, le cation est, de préférence, choisi parmi la famille : imidazolium, pyrrolidinium, ammonium, pipéridinium et phosphonium.

On choisira, avantageusement, un cation à large fenêtre cationique, suffisamment important pour envisager une réaction cathodique évitant ou minimisant la dégradation du liquide ionique.

Avantageusement LI₁ et LI₂ auront le même cation pour augmenter la solubilité de LI₂ dans LI₁.

Avantageusement, on utilisera des anions permettant d'obtenir simultanément une large fenêtre électrochimique, une viscosité modérée, une température de fusion basse (liquide à température ambiante) et une bonne solubilité avec le liquide ionique et les autres espèces de la solution, et ceci ne conduisant pas à l'hydrolyse (dégradation) du liquide ionique.

L'anion TFSI est un exemple qui répond aux critères précédemment mentionnés pour de nombreuses associations avec, par exemple, pour LI₁ : [BMIM][TFSI], ou l'utilisation d'un liquide ionique de type [P66614][TFSI], le liquide ionique 1-éthyl-2,3-triméthyleneimidazolium bis(trifluorométhane sulfonyl)imide ([ETMIm][TFSI]), le liquide ionique N,N-diéthyl-N-methyl-N-2-méthoxyéthyl ammonium bis(trifluorométhylsulfonyl)amide [DEME][TFSA], le liquide ionique N-méthyl-N-butylpyrrolidinium bis(trifluorométhylsufonyl)imide ([PYR14][TFSI]), le liquide ionique N-méthyl-N-propylpiperidinium bis(trifluoromethanesulfonyl) imide (PP13-TFSI).

L'anion peut également être de type bis(fluorosulfonyl)imide (FSA ou FSI), comme le liquide ionique N-méthyl-N-propylpyrrolidinium FSI (P13-FSI), le N-méthyl-N-propylpipéridinium FSI (PP13-FSI), le 1-éthyl-3-méthylimidazolium FSI (EMI-FSI), etc...

L'anion du liquide ionique solvant LI₁ et/ou l'anion du liquide ionique additionnel LI₂ peut avantageusement être doté d'un anion complexant pour former un complexe avec la navette électrochimique.

D'autres associations sont envisageables, avec des liquides ioniques (LI₁) dont le cation sera associé à un anion qui sera indifféremment organique ou inorganique, ayant préférentiellement une large fenêtre anodique.

Dans les nombreux systèmes possibles, on privilégiera un milieu à faible coût et à faible impact environnemental (biodégradabilité), non toxique. La toxicité et la biodégradabilité sont liées à celles de leurs composants. Ainsi, on recherchera des milieux qui possèdent une biodégradabilité élevée et qui sont considérés non toxique et pouvant même utilisés comme additif alimentaire.

La solution de liquide ionique forme, avantageusement, un solvant eutectique profond (ou DES pour "deep eutectic solvents"). Il s'agit d'un mélange liquide à température ambiante obtenu par formation d'un mélange eutectique de 2 sels, de formule générale [Cat]⁺.[X]⁻.z[Y]
avec :
- [Cat]⁺ est le cation du liquide ionique solvant (par exemple ammonium),
   - [X]⁻ l'anion halogénure (par exemple Cl⁻),
   - [Y] un acide de Lewis ou de Brönsted qui peut être complexé par l'anion X⁻ du liquide ionique solvant, et
   - z le nombre de molécules Y.

Les eutectiques peuvent être divisés en trois catégories suivant la nature de Y.

La première catégorie correspond à un eutectique de type I :
Y = MClₓ avec par exemple M = Fe, Zn, Sn, Fe, Al, Ga

La première catégorie correspond à un eutectique de type Il :
Y = MCIx.yHzO avec par exemple M = Cr, Co, Cu, Ni, Fe

La première catégorie correspond à un eutectique de type III :
Y= RZ avec par exemple Z = CONH₂, COOH, OH.

Par exemple, le DES est le chlorure de choline en association avec un donneur de liaison H d'une très faible toxicité, comme le glycérol ou l'urée, ce qui garantit un DES non toxique et à très faible coût.

Selon un autre exemple de réalisation, la chlorure de choline peut être remplacée par de la bétaïne. Même si ces systèmes possèdent une fenêtre de stabilité électrochimique limitée, ils permettent de garantir le noyage et la désactivation d'un accumulateur, éventuellement, ouvert.

Avantageusement, on choisira un composé « Y » pouvant jouer le rôle de navette électrochimique, pouvant être oxydé et/ou réduit. Par exemple, Y est un sel de métal, pouvant être dissous dans la solution de liquide ionique de manière à former des ions métalliques. Par exemple, Y contient du fer.

A titre illustratif, on peut former un eutectique entre un liquide ionique à anion chlorure et des sels métalliques FeCl₂ et FeCl₃ pour différentes proportions et avec différents cations.

Il est également possible de réaliser ce type de réactions avec des eutectiques de type Il qui intègrent dans les sels métalliques des molécules d'eau lorsque la proportion en eau est faible cela ne génère pas de danger. Par faible, on entend typiquement moins de 10% en masse de la solution, par exemple de 5 à 10% en masse de la solution.

On peut également utiliser des eutectiques de type III qui associent le liquide ionique et des espèces donneuses de liaisons hydrogènes (Y), avec un mélange de type [LI₁]/[Y] ou LI₁ peut être un ammonium quaternaire et Y une molécule complexante (donneur de liaison hydrogène) comme l'urée, l'éthylène glycol, la thiourée, etc....

On peut également réaliser un mélange qui va avantageusement modifier les propriétés de la solution pour la décharge du milieu. On peut notamment associer un liquide ionique solvant de type [BMIM][NTF₂] très stable et liquide à température ambiante, mais qui solubilise faiblement la navette électrochimique (ou médiateur redox), comme un chlorure de fer.

Par exemple, on peut associer un liquide ionique additionnel LI₂ de type [BMIM][CI] qui favorisera la solubilisation d'un sel métallique sous la forme d'un chlorure par complexation avec l'anion de LI₂. Ceci permet de simultanément avoir de bonnes propriétés de transport, une bonne solubilité du médiateur redox et donc favoriser le phénomène de décharge.

La solution de liquide ionique comprend une poudre électriquement conductrice.

La poudre est formée de particules conductrices électriques.

Les particules électriquement conductrices sont, par exemple, métalliques, en céramique, en polymère ou encore il peut s'agir d'une combinaison des matériaux précités dans diverses proportions pour obtenir une résistance adaptée pour le temps de décharge choisi, mais aussi pour favoriser la dissipation thermique.

De préférence, les particules sont en un matériau carboné.

Par matériau carboné, on entend un composé solide à base d'atomes de carbone qui se caractérise notamment par sa bonne conductivité électrique et thermique, sa tenue en température et son inertie chimique (sauf à l'oxydation). Un exemple non exhaustif correspond au carbone/graphite dans les batteries Li-on.

Les particules de carbone/graphite peuvent être utilisées seules. Elles proviennent avantageusement d'une batterie.

Alternativement, on choisira un mélange de particules en carbone/graphite et de particules métalliques conductrices comme le cuivre, l'aluminium, l'acier, etc.

La taille des particules va, par exemple, de 100µm à 20mm, et de préférence de 500µm à 2mm.

La poudre est préférentiellement chimiquement stable en solution pour éviter sa dissolution et/ou la perte de ces propriétés dans le temps.

La poudre a une résistivité électrique adaptée pour permettre le contrôle du courant de décharge et la maîtrise de la puissance thermique dissipée. La résistivité électrique est par exemple de 10⁻⁹ à 100 Ohm.m. On choisira par exemple une résistivité électrique de 40 × 10⁻⁶ Ohm.m.

La maîtrise de la décharge est également dépendante de la concentration de la poudre en solution et de l'objet à décharger. Notamment, pour obtenir une résistance adaptée au temps de décharge désiré, on pourra prendre en compte la distance entre les pôles positifs et négatifs, la nature de l'objet (architecture du module, géométrie de la cellule et capacité nominale), mais aussi la surface sous tension (bus bar, terminaux).

De préférence, on choisira des paramètres (quantité de poudre, nature de la poudre, granulométrie, etc...) permettant un temps de décharge inférieur à 24h, préférentiellement inférieur à 10h et de manière plus avantageuse inférieur à 2h. Par exemple, la résistance entre le terminal positif et le terminal négatif du générateur électrochimique une fois immergé dans le liquide ionique est comprise entre 1 mΩ et 100 Ω, plus avantageusement entre 10 mΩ et 10 Ω (sachant que la résistance correspond à R=ρ*I/S, avec ρ la résistivité, I la longueur entre les deux pôles et S la section droite d'aire). La résistance sera non nulle pour éviter une décharge brutale, synonyme d'un court-circuit et d'un risque d'explosion ou de dégradation de l'accumulateur.

La solution de liquide ionique, association poudre/solution, assure une conduction électrique adaptée pour le déchargement résistif et une dissipation thermique suffisante. Suivant la puissance du générateur électrochimique, on peut modifier, d'une part, le rapport poudre/solution de la solution et, d'autre part, le rapport entre le volume de solution et la masse de générateur électrochimique à traiter.

De préférence, le rapport poudre/solution sera compris entre 1% et 70%, préférentiellement entre 5% et 50% en masse.

Le rapport massique entre le générateur électrochimique et le volume de solution (kg/L), sera par exemple entre 1 et 100, préférentiellement entre 2 et 20.

La solution de liquide ionique peut, en outre, comprendre une espèce redox (aussi appelé médiateur redox). Il s'agit d'un ion ou d'une espèce en solution pouvant être réduite sur l'électrode négative 20, ou sur le terminal 22 lié à l'électrode négative 20. Ceci permet d'extraire le lithium de l'électrode négative pour rendre l'accumulateur non réactif à l'air.

L'utilisation d'une navette électrochimique permet de faire fonctionner le dispositif en boucle fermée. Il peut s'agir d'un couple électrochimique ou leur association. De préférence, il s'agit d'un couple redox jouant le rôle de navette électrochimique (ou de médiateur redox) pour réduire la dégradation du milieu, en assurant les réactions redox.

On entend par couple redox, un oxydant et un réducteur en solution capable d'être, respectivement, réduit et oxydé sur les électrodes/terminaux des piles. L'oxydant et le réducteur peuvent être introduits en proportion équimolaire ou non équimolaire.

Le couple redox peut être un couple électrochimique métallique ou une de leurs associations : Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺.

En cas d'ouverture du générateur électrochimique, une des espèces redox peut provenir du générateur lui-même. Il peut s'agir notamment de cobalt, nickel et/ou manganèse.

L'espèce redox et le couple redox peuvent également être choisis parmi les molécules organiques, et en particulier parmi : 2,4,6-tri-t-butylphénoxyl, nitronyl nitroxide/2,2,6,6-tétraméthyl-1-piperidinyloxy (TEMPO), tétracyanoéthylène, tétraméthylphénylènedi-amine, dihydrophénazine, des molécules aromatiques par exemple ayant un groupement méthoxy, un groupe N,N-diméthylamino tel que l'anisole méthoxybenzène, le diméthoxybenzène, ou encore un groupement N,N-diméthylaniline comme le N,N-diméthylaminobenzène. On peut également mentionner le 10-méthyl-phénothiazine (MPT), le 2,5-di-tert-butyl-1,4-diméthoxybenzène (DDB) et le 2-(pentafluorophényl)-tétrafluoro-1,3,2-benzodioxaborole (PFPTFBDB).

Il peut également s'agir de la famille des métallocènes (Fc/Fc+, Fe(bpy)₃(ClO₄)₂ et Fe(phen) ₃(ClO₄)₂ et ses dérivés) ou de la famille des molécules halogénés (Cl_{2/}Cl⁻, Cl⁻/Cl₃⁻ Br₂/Br⁻, I₂/I⁻, I⁻/I₃⁻).

On choisira notamment un bromure ou un chlorure. De préférence il s'agit d'un chlorure, pouvant facilement complexer les métaux. Par exemple, le fer, complexé par l'anion chlorure, forme du FeCl₄⁻ qui peut diminuer la réactivité de l'électrode négative.

Il peut également s'agir du tétraméthylphénylènediamine.

On pourra également associer plusieurs couples redox, dont les métaux des ions métalliques sont identiques ou différents.

On choisira par exemple Fe²⁺/Fe³⁺ et/ou Cu⁺/Cu²⁺. Ces derniers sont solubles dans leurs deux états d'oxydation, ils ne sont pas toxiques, ils ne dégradent pas le liquide ionique et ils ont des potentiels redox adéquats pour extraire le lithium en cas d'ouverture de la pile. On pourra également choisir l'association V²⁺/V³⁺ et V⁴⁺/V⁵⁺.

La solution de liquide ionique peut comporter une ou plusieurs espèces actives comme un agent d'extinction et/ou un retardateur de flamme visant à prévenir un emballement thermique, notamment en cas d'ouverture d'accumulateur. Il peut s'agir d'un alkyl phosphate, éventuellement fluoré (alkyl phosphate fluoré), comme le phosphate de triméthyle, le phosphatede triéthyle, ou le tris(2,2,2-trifluoroethyl) phosphate). La concentration en espèce active peut être de 80% en masse à 5%, de préférence de 30% à 10% en masse.

Optionnellement, la solution de liquide ionique peut comprendre un agent desséchant, et/ou un agent favorisant le transport de matière, et/ou un agent de protection qui est un stabilisateur/réducteur d'espèces corrosives et toxiques comme PF₅, HF, POF₃,...

L'agent favorisant le transport de matière est, par exemple, une fraction d'un co-solvant pouvant être ajouté pour diminuer la viscosité.

De préférence, on choisira un solvant organique pour agir efficacement sans générer de risques vis-à-vis de la décharge ou de l'inflammabilité. Il peut s'agir de vinylène carbonate (VC), de gamma-butyrolactone (y-BL), de propylène carbonate (PC), de poly(éthylène glycol), de diméthyl éther. La concentration de l'agent favorisant le transport de matière va, avantageusement, de 1% à 40% et plus avantageusement de 10% à 40 % en masse.

L'agent de protection apte à réduire et/ou stabiliser des éléments corrosifs et/ou toxiques est, par exemple, un composé de type butylamine, un carbodiimide (type N,N-dicyclohexylcarbodiimide), N,N-diethylamino trimethyl-silane, le tris(2,2,2-trifluoroethyl) phosphite (TTFP), un composé à base d'amine comme le 1-méthyl-2-pyrrolidinone, un carbamate fluoré ou le hexamethyl-phosphoramide. Cela peut également être un composé de la famille des cyclophosphazène comme l'hexaméthoxycyclotriphosphazène.

Il peut être, avantageusement, ajouté à la solution de liquide ionique un matériau composite, qui est un matériau à changement de phase. Ce matériau composite est, par exemple, l'association d'une paraffine avec un élément conducteur thermique qui peut être de manière non exhaustive le carbone, l'aluminium, le cuivre ou tout autre matière qui favorise la conductivité thermique du mélange. Ce mélange dispose de propriétés thermo-physiques (capacité thermique massique, chaleur latente et conductivité thermique) favorables pour capter la chaleur et la restituer.

Avantageusement, l'énergie thermique absorbée par la solution durant le processus de décharge résistive pourra être récupérée avec un échangeur de chaleur. Ainsi, il sera possible d'opérer un processus continu de décharge et de récupération d'énergie par circulation continue de la solution de liquide ionique entre le réacteur de décharge et l'échangeur de chaleur.

De préférence, la température de la solution de liquide ionique dans laquelle est plongé le générateur électrochimique n'excède pas 60°C, pour éviter des réactions de dégradation interne de l'électrolyte du générateur électrochimique et/ou éviter un processus d'emballement conduisant à une dégradation et/ou à une explosion.

L'étape de décharge peut être mise en oeuvre à des températures allant de 20°C à 60°C, de préférence de 20°C à 40°C et encore plus préférentiellement à température ambiante (20-25°C).

Le procédé peut être réalisé sous atmosphère inerte, par exemple sous argon, dioxyde de carbone, azote ou un de leurs mélanges.

La solution de liquide ionique peut être refroidie pour évacuer les calories durant le processus de décharge.

La solution de liquide ionique peut être agitée pour améliorer l'apport en réactif et/ou améliorer le refroidissement.

Le procédé de décharge permet de décharger en toute sécurité le générateur électrochimique en vue de son recyclage (par voie pyrométallurgique et/ou par voie hydrométallurgique) ou de son stockage. Par exemple, il peut s'agir d'un stockage provisoire en attendant de le transférer, par exemple dans une usine de recyclage pour valoriser ces différents composants.

Le procédé de décharge peut être, avantageusement, réalisé pendant le transport du générateur électrochimique, ce qui permet un gain de temps considérable et sécurise le transport du générateur électrochimique.

A titre illustratif, un procédé de recyclage peut comprendre les étapes suivantes : tri, démantèlement, décharge selon le procédé précédemment décrit, recyclage par les voies conventionnelles (pyrométallurgie, hydrométallurgie,...).

Les fractions valorisables du générateur électrochimique peuvent ensuite être récupérées et réutilisées.

## Revendications

1. Procédé de décharge d'un générateur électrochimique (10) comprenant une électrode négative (20) contenant du lithium ou du sodium et une électrode positive (30) contenant éventuellement du lithium ou du sodium, le procédé comprenant une étape de décharge du générateur électrochimique (10) au cours de laquelle le générateur électrochimique (10) est mis en contact avec une solution de liquide ionique (100) comprenant un liquide ionique solvant et une poudre électriquement conductrice de manière à le décharger.

2. Procédé selon la revendication précédente, **caractérisé en ce que** la solution de liquide ionique comprend, en outre, une espèce redox dite oxydante apte à être réduite sur l'électrode négative.

3. Procédé selon la revendication précédente, **caractérisé en ce que** la solution de liquide ionique (100) comprend une deuxième espèce redox dite réductrice apte à être oxydée sur l'électrode positive, l'espèce redox dite oxydante et l'espèce redox dite réductrice formant un couple d'espèce redox.

4. Procédé selon la revendication précédente, **caractérisé en ce que** le couple d'espèce redox est un couple métallique, de préférence choisi parmi Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺, un couple de molécules organiques, un couple de métallocènes tel que Fc/Fc⁺, ou un couple de molécules halogénées comme par exemple Cl₂/Cl⁻ ou Cl⁻/Cl₃⁻.

5. Procédé selon l'une quelconque des revendications précédentes, **caractérisé en ce que** la solution de liquide ionique (100) comprend un liquide ionique additionnel.

6. Procédé selon l'une quelconque des revendications précédentes, **caractérisé en ce que** la solution de liquide ionique forme un solvant eutectique profond.

7. Procédé selon l'une quelconque des revendications précédentes, **caractérisé en ce que** la décharge du générateur électrochimique (10) est réalisée sous air ou sous atmosphère inerte.

8. Procédé selon l'une quelconque des revendications précédentes, **caractérisé en ce qu'**il comprend, préalablement à l'étape de décharge du générateur électrochimique (10), une étape de démantèlement et/ou une étape de tri.

9. Procédé selon l'une quelconque des revendications précédentes, **caractérisé en ce qu'**il comprend, ultérieurement à l'étape de décharge du générateur électrochimique (10), une étape de stockage et/ou une étape pyrométallurgique et/ou hydrométallurgique.

10. Procédé selon l'une quelconque des revendications précédentes, **caractérisé en ce que** la poudre électriquement conductrice comprend des particules en un matériau carboné.

11. Procédé selon l'une quelconque des revendications précédentes, **caractérisé en ce que** le procédé est réalisé pendant le transport du générateur électrochimique (10), par exemple, vers un lieu de recyclage et/ou de démantèlement.

## Patentansprüche

1. Verfahren zum Entladen eines elektrochemischen Generators (10), umfassend eine negative Elektrode (20), die Lithium oder Natrium enthält, und eine positive Elektrode (30), die eventuell Lithium oder Natrium enthält, wobei das Verfahren einen Entladeschritt des elektrochemischen Generators (10) umfasst, im Laufe dessen der elektrochemische Generator (10) in Kontakt mit einer ionischen Flüssigkeitslösung (100) gebracht wird, die eine ionische Lösungsmittelflüssigkeit und ein elektrisch leitfähiges Pulver umfasst, um sie zu entladen.

2. Verfahren nach dem vorstehenden Anspruch, **dadurch gekennzeichnet, dass** die ionische Flüssigkeitslösung weiter eine sogenannte oxidierende Redox-Spezies umfasst, die imstande ist, auf der negativen Elektrode reduziert zu werden.

3. Verfahren nach dem vorstehenden Anspruch, **dadurch gekennzeichnet, dass** die ionische Flüssigkeitslösung (100) eine zweite sogenannte reduzierende Redox-Spezies umfasst, die imstande ist, auf der positiven Elektrode oxidiert zu werden, wobei die sogenannte oxidierende Redox-Spezies und die sogenannte reduzierende Redox-Spezies ein Redox-Spezies-Paar bilden.

4. Verfahren nach dem vorstehenden Anspruch, **dadurch gekennzeichnet, dass** das Redox-Spezies-Paar ein metallisches Paar, vorzugsweise ausgewählt aus Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ oder Fe²⁺/Fe³⁺, ein Paar aus organischen Molekülen, ein Paar aus Metallocenen, wie Fc/Fc⁺, oder ein Paar aus halogenierten Molekülen, wie beispielsweise Cl₂/Cl⁻ oder Cl-/Cl₃⁻- ist.

5. Verfahren nach einem der vorstehenden Ansprüche, **dadurch gekennzeichnet, dass** die ionische Flüssigkeitslösung (100) eine zusätzliche ionische Flüssigkeit umfasst.

6. Verfahren nach einem der vorstehenden Ansprüche, **dadurch gekennzeichnet, dass** die ionische Flüssigkeitslösung ein tiefes eutektisches Lösungsmittel bildet.

7. Verfahren nach einem der vorstehenden Ansprüche, **dadurch gekennzeichnet, dass** die Entladung des elektrochemischen Generators (10) unter Luft oder unter Inertgasatmosphäre durchgeführt wird.

8. Verfahren nach einem der vorstehenden Ansprüche, **dadurch gekennzeichnet, dass** es vor dem Entladeschritt des elektrochemischen Generators (10) einen Abbauschritt und/oder einen Sortierschritt umfasst.

9. Verfahren nach einem der vorstehenden Ansprüche, **dadurch gekennzeichnet, dass** es nach dem Entladeschritt des elektrochemischen Generators (10) einen Lagerungsschritt und/oder einen pyrometallurgischen und/oder hydrometallurgischen Schritt umfasst.

10. Verfahren nach einem der vorstehenden Ansprüche, **dadurch gekennzeichnet, dass** das elektrisch leitfähige Pulver Partikel aus einem kohlenstoffhaltigen Material umfasst.

11. Verfahren nach einem der vorstehenden Ansprüche, **dadurch gekennzeichnet, dass** das Verfahren während des Transports des elektrochemischen Generators (10) beispielsweise zu einem Recycling- und/oder Abbauort durchgeführt wird.

## Claims

1. A method for discharging an electrochemical generator (10) comprising a negative electrode (20) containing lithium or sodium and a positive electrode (30) possibly containing lithium or sodium, the method comprising a step of discharging the electrochemical generator (10) during which the electrochemical generator (10) is brought into contact with an ionic liquid solution (100) comprising a solvent ionic liquid and an electrically-conductive powder so as to discharge it.

2. The method according to the preceding claim, **characterised in that** the ionic liquid solution further comprises a so-called oxidant redox species able to be reduced on the negative electrode.

3. The method according to the preceding claim, **characterised in that** the ionic liquid solution (100) comprises a second so-called reductant redox species able to be oxidised on the positive electrode, the so-called oxidant redox species and the so-called reductant redox species forming a redox species pair.

4. The method according to the preceding claim, **characterised in that** the pair of redox species is a metallic pair, preferably selected from among Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ or Fe²⁺/Fe³⁺, a pair of organic molecules, a pair of metallocenes such as Fc/Fc⁺, or a pair of halogenated molecules like for example Cl₂/Cl⁻ or Cl⁻/Cl₃⁻.

5. The method according to any one of the preceding claims, **characterised in that** the ionic liquid solution (100) comprises an additional ionic liquid.

6. The method according to any one of the preceding claims, **characterised in that** the ionic liquid solution forms a deep eutectic solvent.

7. The method according to any one of the preceding claims, **characterised in that** the discharge of the electrochemical generator (10) is carried out under air or under an inert atmosphere.

8. The method according to any one of the preceding claims, **characterised in that** it comprises, prior to the step of discharging the electrochemical generator (10), a dismantlement step and/or a sorting step.

9. The method according to any one of the preceding claims, **characterised in that** it comprises, subsequently to the step of discharging the electrochemical generator (10), a storage step and/or a pyrometallurgical and/or hydrometallurgical step.

10. The method according to any one of the preceding claims, **characterised in that** the electrically-conductive powder comprises particles made of a carbonated material.

11. The method according to any one of the preceding claims, **characterised in that** the method is carried out during the transport of the electrochemical generator (10), for example, towards a recycling and/or dismantling site.
